# EUROPEAN PATENT APPLICATION

(11) **EP 4 830 874 A1**
(43) Date of publication of application: **28.10.2026**
(21) Application number: 25215147.7
(22) Date of filing: 12.11.2025
(51) Int. Cl.: B25J 9/00

(54) **KNEE EXOSKELETON**

(30) Priority: 24.04.2025 CN 202520795587 U
(71) Applicant: Dnsys Innovation (Beijing) Technology Development Ltd., Beijing 100083 (CN)
(72) Inventor: Dong, Shiqian, Beijing, 100083 (CN)
(74) Representative: Metida

(57) **Abstract**

A knee exoskeleton is provided, relating to the technical field of exoskeletons. The knee exoskeleton includes an anterior thigh unit, a posterior thigh unit, a calf unit, and an actuator. The anterior thigh unit and the posterior thigh unit are connected to the actuator, and the calf unit is in drive connection with the actuator. The anterior thigh unit includes an anterior thigh plate capable of rotating relatively, the posterior thigh unit includes a posterior thigh plate capable of rotating relatively and a telescopic adjustment assembly capable of adjusting a relative distance between the anterior thigh plate and the posterior thigh plate in horizontal and vertical directions, and the posterior thigh plate is located above and behind the anterior thigh plate. The calf unit includes a calf plate capable of rotating relatively, and the calf plate is located below and behind the anterior thigh plate. The knee exoskeleton is rich in adjustment modes and can be well adapted to users with different heights, different leg shapes, and different degrees of thickness, making the range of application wider. The structure is more concise, with better force feedback effect and accurate force transmission.

## Description

### TECHNICAL FIELD

The present disclosure relates to the technical field of exoskeletons, and in particular to a knee exoskeleton.

### BACKGROUND

Exoskeleton is a common name of arthropod shell, which is named because it is as hard as bone, such as a crab shell, insect cuticle, and the like, and some people regard a turtle shell as an exoskeleton. In the field of robotics, the exoskeleton refers in particular to a wearable mobile machine, which can provide power through a variety of technical combinations to assist the human body to make various actions, making the limbs have higher strength and endurance.

With the development of technology, apparatuses designed to assist the movement of specific populations have gradually emerged. For the elderly with degraded knee joint function, patients with knee joint injury, hikers or athletes expecting to gain stronger leg strength, the knee exoskeleton can help users recover and enhance the related functions of the knee joint to varying degrees.

The applicant finds that there are at least the following technical problems in the prior art: the existing knee exoskeleton is complicated in structure, generally heavy, expensive and cumbersome to wear, and due to the great differences in the height, leg taper curve and leg thickness of different users, the structure of the existing knee exoskeleton is relatively fixed, with poor adjustability and no universal applicability.

### SUMMARY

An objective of the present disclosure is to provide a knee exoskeleton to solve the technical problems in the prior art. Many technical effects capable of being produced by preferred technical solutions among the technical solutions provided by the present disclosure are described in detail below.

To achieve the objective described above, the present disclosure provides the following technical solutions.

A knee exoskeleton includes an anterior thigh unit, a posterior thigh unit, a calf unit, and an actuator, wherein the anterior thigh unit and the posterior thigh unit are connected to the actuator, and the calf unit is in drive connection with the actuator; the anterior thigh unit includes an anterior thigh plate capable of rotating relatively, the posterior thigh unit includes a posterior thigh plate capable of rotating relatively and a telescopic adjustment assembly capable of regulating a relative distance between the anterior thigh plate and the posterior thigh plate in both horizontal and vertical directions; the posterior thigh plate is located above and behind the anterior thigh plate, and the calf unit includes a calf plate capable of rotating relatively, and the calf plate is located below and behind the anterior thigh plate.

Preferably, the anterior thigh unit further includes an anterior thigh link and an anterior thigh plate shaft, one end of the anterior thigh link is connected to the actuator, and the other end of the anterior thigh link is connected to one end of the anterior thigh plate shaft; the anterior thigh plate is rotatably connected to the anterior thigh plate shaft; and a first axial adjustment assembly is jointly disposed on the anterior thigh plate shaft and the anterior thigh plate, and a relative position between the anterior thigh plate shaft and the anterior thigh plate in an axial direction can be adjusted through the first axial adjustment assembly.

Preferably, the posterior thigh unit further includes a connecting housing, a posterior thigh link, and a posterior thigh plate shaft; the connecting housing is connected to the actuator, one end of the posterior thigh link is movably connected to the connecting housing through the telescopic adjustment assembly, and the other end of the posterior thigh link is connected to the posterior thigh plate shaft; the posterior thigh plate is rotatably connected to the posterior thigh plate shaft; and a second axial adjustment assembly is jointly disposed on the posterior thigh plate shaft and the posterior thigh plate, and a relative position between the posterior thigh plate shaft and the posterior thigh plate in an axial direction can be adjusted through the second axial adjustment assembly.

Preferably, the telescopic adjustment assembly includes an anti-rotation sleeve, a sliding chute, a locking structure, and a telescopic adjusting nut; the anti-rotation sleeve is sleeved outside the posterior thigh link and can limit rotation of the posterior thigh link; the sliding chute is arranged on the connecting housing, the anti-rotation sleeve can slide relative to the sliding chute, the locking structure is connected to the connecting housing and is configured to press against the anti-rotation sleeve in a locking state, the telescopic adjusting nut is arranged on an outer side of the connecting housing and is rotatably connected to the locking structure; and the telescopic adjusting nut can adjust the locking state of the locking structure.

Preferably, the calf unit further includes a connecting flange, a calf link, and a calf plate shaft; the connecting flange is in drive connection with the actuator; one end of the calf link is detachably connected to the connecting flange through a positioning marble, and the other end of the calf link is connected to the calf plate shaft; the calf plate is rotatably connected to the calf plate shaft, and a third axial adjustment assembly is jointly disposed on the calf plate shaft and the calf plate, and a relative axial position between the calf plate shaft and the calf plate can be adjusted through the third axial adjustment assembly.

Preferably, the actuator includes a motor, a reducer, a motor Hall magnet, a reducer Hall magnet, and an ECU (Electronic Control Unit) computing unit; the motor is in transmission connection with the reducer, the reducer is in drive connection with the connecting flange, the motor Hall magnet is arranged on the motor, the reducer Hall magnet is arranged on the reducer, and the motor Hall magnet and the reducer Hall magnet are in communication connection with the ECU computing unit.

Preferably, the motor includes a motor stator, a motor rotor, and a motor rotor gear; the motor stator is located on an outer side of the motor rotor, the motor rotor gear is connected to the motor rotor, and the motor Hall magnet is connected to the motor rotor gear;
the reducer includes a reducer gear, a gear mounting base, a crankshaft, a cycloidal gear, a pin, a pin wheel carrier, a magnet mounting base, and a reducer output flange; the reducer gear is in mesh connection with the motor rotor gear, the reducer gear, the gear mounting base and the crankshaft are connected in turn, the crankshaft is connected to the cycloidal gear, the pin wheel carrier is capable of forming a constraint on the cycloidal gear, the cycloidal gear is connected to the reducer output flange through the pin, the magnet mounting base is connected to the reducer output flange, the reducer output flange is in flange connection with the connecting flange, and the reducer Hall magnet is connected to the magnet mounting base.

Preferably, the knee exoskeleton further includes a thigh strap, where both ends of the thigh strap are connected to the anterior thigh plate and the posterior thigh plate, respectively.

Preferably, the knee exoskeleton further includes a calf strap, where the calf strap is connected to the calf plate.

Preferably, the anterior thigh plate corresponds to anterior thigh of a human, the posterior thigh plate corresponds to posterior thigh of the human, and the calf plate corresponds to posterior calf of the human.

The present disclosure has beneficial effects that by disposing the anterior thigh plate, the posterior thigh plate and the calf plate, respectively, the knee exoskeleton can form a three-point fixed form, and an optimal mechanical feedback effect can be obtained by combining the specific arrangement positions of the posterior thigh plate located above and behind the anterior thigh plate and the calf plate located below and behind the anterior thigh plate, so that the knee exoskeleton can be well adapted to users with different heights.

By disposing the telescopic adjustment assembly, the telescopic adjustment assembly can adjust a relative distance between the anterior thigh plate and the posterior thigh plate in horizontal and vertical directions, thereby matching the degrees of thickness of the legs of the users. Different users can adjust the telescopic adjustment assembly according to the actual degrees of thickness of their own legs.

By disposing the anterior thigh plate, the posterior thigh plate and the calf plate capable of rotating relatively, relative arrangement angles of the anterior thigh plate, the posterior thigh plate and the calf plate can be adjusted in a rotating manner to fit a taper curve of the leg of the user, and different users can flexibly adjust the relative arrangement angles of the anterior thigh plate, the posterior thigh plate and the calf plate according to the taper curve of their own legs.

The knee exoskeleton is rich in adjustment modes, and can be well adapted to users with different heights, different leg shapes, and different degrees of thickness, making the range of application wider.

The knee exoskeleton has more concise structure, more streamlined size, and smaller volume, the knee exoskeleton with shorter calf part and longer thigh part can form a better fixation effect and can reduce the restraint on the leg, so that the leg of the user has a lighter feeling in the use process, and can obtain a better force feedback effect and achieve accurate force transmission.

### BRIEF DESCRIPTION OF THE DRAWINGS

To describe technical solutions in embodiments in the embodiments of the present disclosure or in the prior art more clearly, the following briefly introduces accompanying drawings required for describing the embodiments or the prior art. Apparently, the accompanying drawings in the following description show merely some embodiments of the present disclosure, and a person of ordinary skill in the art may still derive other drawings from these accompanying drawings without creative efforts.
FIG. 1 is a diagram of a structure according to the present disclosure;
FIG. 2 is a diagram of a structure according to the present disclosure when an anterior thigh plate, a posterior thigh plate and a calf plate are hidden;
FIG. 3 is a diagram of a structure according to the present disclosure when a thigh strap and a calf strap are mounted;
FIG. 4 is a diagram of a detailed structure of a telescopic adjustment assembly according to the present disclosure;
FIG. 5 is a diagram of a detailed structure of an actuator according to the present disclosure;
FIG. 6 is a diagram of a top-view structure according to the present disclosure.

In the drawings: 1-anterior thigh unit; 11-anterior thigh plate; 12-anterior thigh link; 13-anterior thigh plate shaft;
2-posterior thigh unit; 21-posterior thigh plate; 22-telescopic adjustment assembly; 221-anti-rotation sleeve; 222-sliding chute; 223-locking structure; 224-telescopic adjusting nut; 23-connecting housing; 24-posterior thigh link; 25-posterior thigh plate shaft;
3-calf unit; 31-calf plate; 32-connecting flange; 33-calf link; 34-calf plate shaft;
4-actuator; 41-motor; 411-motor stator; 412-motor rotor; 413-motor rotor gear; 42-reducer; 421-reducer gear; 422-gear mounting base; 423-crankshaft; 424-cycloidal gear; 425-pin; 426-pin wheel carrier; 427-magnet mounting base; 428-reducer output flange; 43-motor Hall magnet; 44-reducer Hall magnet; 45-housing;
5-thigh strap;
6-calf strap.

### DETAILED DESCRIPTION OF THE EMBODIMENTS

To make the objectives, technical solutions and advantages of the present disclosure more clearly, the technical solutions of the present disclosure are described in detail below. Apparently, the described embodiments are merely a part rather than all of the embodiments of the present disclosure. All other implementations obtained by a person of ordinary skill in the art based on the embodiments of the present disclosure without creative efforts shall fall within the scope of protection of the present disclosure.

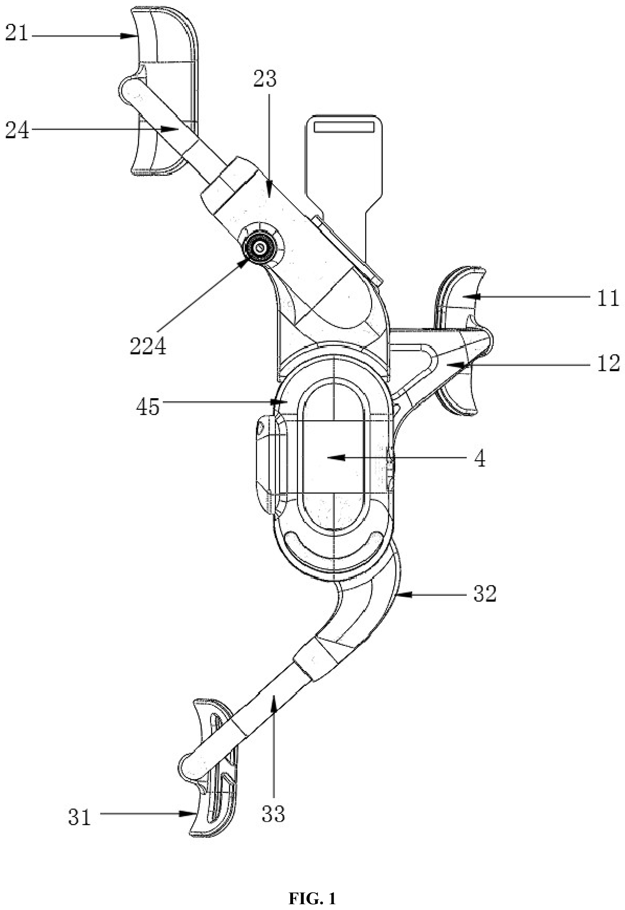

In the description of the present disclosure, it should be understood that the orientation or positional relationship indicated by terms "center", "lateral", "length", "width", "height", "upper", "lower", "front", "back", "left", "right", "vertical", "horizontal", "top", "bottom", "inside" and "outside" is based on the orientation or positional relationship shown in FIG. 1 only for convenience of description of the present invention and simplification of description rather than indicating or implying that the device or element referred to must have a particular orientation, be constructed and operate in a particular orientation, and thus are not to be construed as limiting the present disclosure.

In the description of the present disclosure, unless expressly specified and limited otherwise, the terms "mount", "couple" and "connection" should be understood broadly, for example, it may be a fixed connection, a detachable connection, or an integrated connection; it may be a mechanical connection, or an electrical connection; it may be a direct connection, an indirect connection through an intermediate medium. For those of ordinary skill in the art, the specific meanings of the foregoing terms in the present disclosure can be understood on a case-by-case basis.

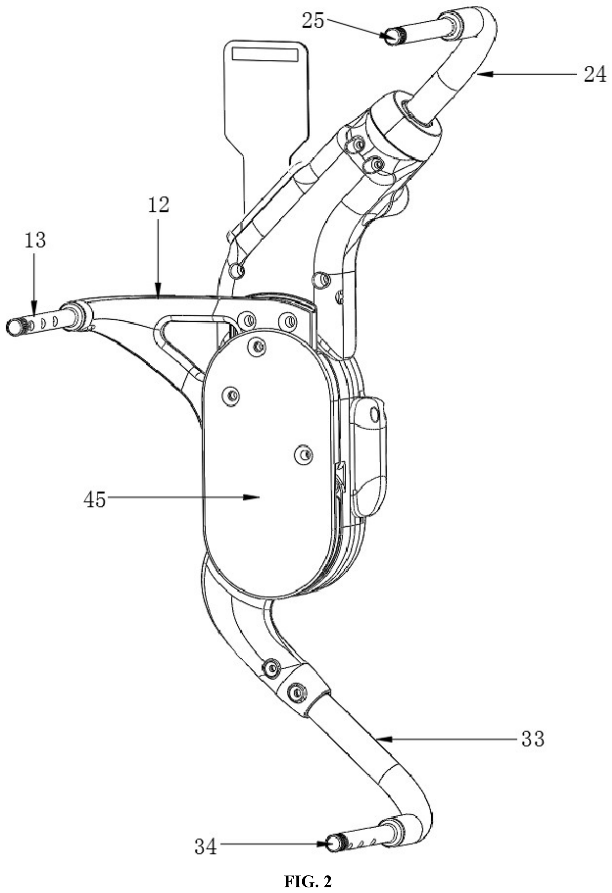

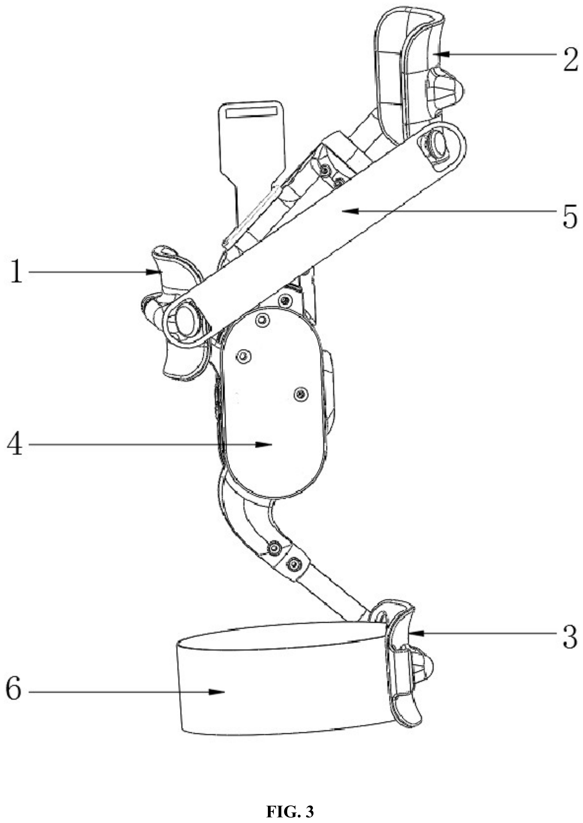

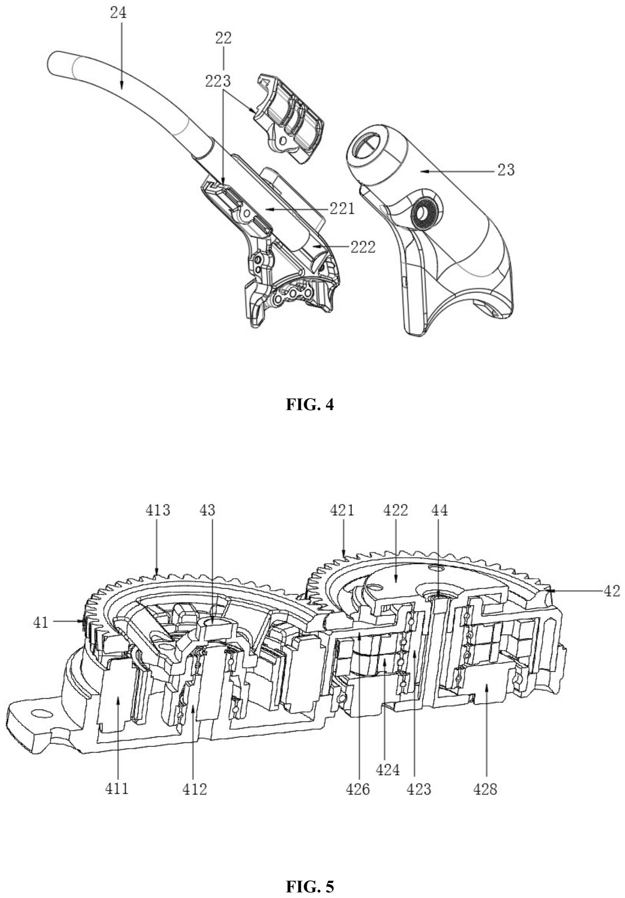

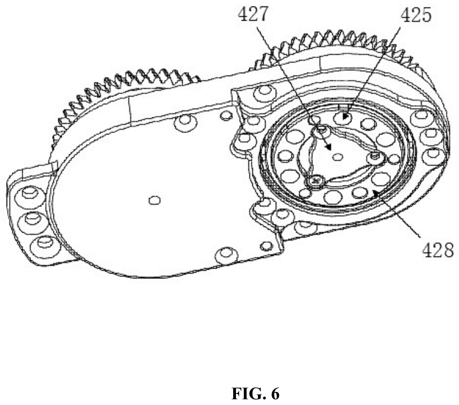

With reference to FIG. 1 to FIG. 6, the present disclosure provides a knee exoskeleton, including an anterior thigh unit 1, a posterior thigh unit 2, a calf unit 3, and an actuator 4. The actuator 4 is provided with a housing 45, the anterior thigh unit 1 and the posterior thigh unit 2 are both connected to the housing 45 of the actuator 4, and the calf unit 3 is in drive connection with the actuator 4.

The anterior thigh unit 1 includes an anterior thigh plate 11 capable of rotating relatively. When a user wears the knee exoskeleton in practical, the anterior thigh plate 11 corresponds to anterior thigh of a human, the anterior thigh plate 11 can fit a taper curve of the anterior thigh properly, and corresponding angle adjustment can be performed according to the taper curve.

The posterior thigh unit 2 includes a posterior thigh plate 21 capable of rotating relatively and a telescopic adjustment assembly 22 capable of adjusting a relative distance between the anterior thigh plate 11 and the posterior thigh plate 21 in horizontal and vertical directions. The posterior thigh plate 21 is located above and behind the anterior thigh plate 11. When the user wears the knee exoskeleton in practical, the posterior thigh plate 21 corresponds to posterior thigh of the human, the anterior thigh plate 11 can fit a taper curve of the posterior thigh properly, and corresponding angle adjustment can be performed according to the taper curve.

The calf unit 3 includes a calf plate 31 capable of rotating relatively, and the calf plate 31 is located below and behind the anterior thigh plate 11. When the user wears the knee exoskeleton in practical, the calf plate 31 corresponds to posterior calf of the human, the calf plate 31 can fit a taper curve of the posterior calf properly, and corresponding angle adjustment can be performed according to the taper curve.

By disposing the anterior thigh plate 11, the posterior thigh plate 21 and the calf plate 31, respectively, the knee exoskeleton can form a three-point fixed form, and an optimal mechanical feedback effect can be obtained by combining the specific arrangement positions of the posterior thigh plate 21 located above and behind the anterior thigh plate 11 and the calf plate 31 located below and behind the anterior thigh plate 11, so that the knee exoskeleton can be well adapted to users with different heights.

By disposing the telescopic adjustment assembly 22, the telescopic adjustment assembly 22 can adjust a relative distance between the anterior thigh plate 11 and the posterior thigh plate 21 in horizontal and vertical directions, thereby matching the degrees of thickness of the legs of the users. Different users can adjust the telescopic adjustment assembly 22 according to the actual degrees of thickness of their own legs.

By disposing the anterior thigh plate 11, the posterior thigh plate 21 and the calf plate 31 capable of rotating relatively, relative arrangement angles of the anterior thigh plate 11, the posterior thigh plate 21 and the calf plate 31 can be adjusted in a rotating manner to fit a taper curve of the leg of the user, and different users can flexibly adjust the relative arrangement angles of the anterior thigh plate 11, the posterior thigh plate 21 and the calf plate 31 according to the taper curve of their own legs.

The knee exoskeleton is rich in adjustment modes, and can be well adapted to users with different heights, different leg shapes, and different degrees of thickness, making the range of application wider.

The knee exoskeleton has more concise structure, more streamlined size, and smaller volume, the knee exoskeleton with shorter calf part and longer thigh part can form a better fixation effect and can reduce the restraint on the leg, so that the leg of the user has a lighter feeling in the use process, and can obtain a better force feedback effect and achieve accurate force transmission.

The knee exoskeleton can provide an auxiliary device for people with knee joint injuries, as well as people in need of knee joint assistance or enhancement, which can help users kick and bend their knees. The knee exoskeleton is easy to wear and carry, and low in cost. The knee exoskeleton can be used for either single-knee or dual-knee support, without affecting body turning, which can adapt to various working conditions such as going up and down stairs, mountain climbing, and uphill/downhill and can also help with take-off and provide downward movement cushioning.

As an alternative implementation, the anterior thigh unit 1 further includes an anterior thigh link 12 and an anterior thigh plate shaft 13.

One end of the anterior thigh link 12 is connected to the housing 45 of the actuator 4. The connection here is preferably a bolted connection, which makes assembly and disassembly more convenient and efficient.

The other end of the anterior thigh link 12 is connected to one end of the anterior thigh plate shaft 13. The connection here is preferably a bolted connection, which makes assembly and disassembly more convenient and efficient.

The anterior thigh plate 11 is rotatably connected to the anterior thigh plate shaft 13, the anterior thigh plate 11 can rotate relative to the anterior thigh plate shaft 13, thereby adapting to taper curves of anterior thigh of different users.

A first axial adjustment assembly is jointly disposed on the anterior thigh plate shaft 13 and the anterior thigh plate 11, and a relative position between the anterior thigh plate shaft 13 and the anterior thigh plate 11 in an axial direction can be adjusted through the first axial adjustment assembly. Therefore, the anterior thigh plate 11 can axially move relative to the anterior thigh plate shaft 13 to further fit users with different heights and leg types. In this embodiment, the first axial adjustment assembly is preferably a combined structure of a bolt and a fixing hole. By forming multiple fixing holes in the anterior thigh plate shaft 13, the anterior thigh plate 11 can be bolted by selecting the fixing holes at different positions to achieve the adjustment of the relative position.

As an alternative implementation, the posterior thigh unit 2 further includes a connecting housing 23, a posterior thigh link 24, and a posterior thigh plate shaft 25.

The connecting housing 23 is connected to the housing 45 of the actuator 4. The connection here is preferably a bolted connection, which makes assembly and disassembly more convenient and efficient.

One end of the posterior thigh link 24 is movably connected to the connecting housing 23 through a telescopic adjustment assembly 22.

The other end of the posterior thigh link 24 is connected to the posterior thigh plate shaft 25. The connection here is preferably a bolted connection, which makes assembly and disassembly more convenient and efficient.

The posterior thigh plate 21 is rotatably connected to the posterior thigh plate shaft 25, the posterior thigh plate 21 can rotate relative to the posterior thigh plate shaft 25, thereby adapting to taper curves of posterior thigh of different users.

A second axial adjustment assembly is jointly disposed on the posterior thigh plate shaft 25 and the posterior thigh plate 21, and a relative position between the posterior thigh plate shaft 25 and the posterior thigh plate 21 in an axial direction can be adjusted through the second axial adjustment assembly. Therefore, the posterior thigh plate 21 can axially move relative to the posterior thigh plate shaft 25 to further fit users with different heights and leg types. In this embodiment, the second axial adjustment assembly is preferably a combined structure of a bolt and a fixing hole. By forming multiple fixing holes in the posterior thigh plate shaft 25, the posterior thigh plate 21 can be bolted by selecting the fixing holes at different positions to achieve the adjustment of the relative position.

As an alternative implementation, the telescopic adjustment assembly 22 includes an anti-rotation sleeve 221, a sliding chute 22, a locking structure 223, and a telescopic adjusting nut 224.

The anti-rotation sleeve 221 is sleeved outside the posterior thigh link 24, and a key is arranged between the anti-rotation sleeve 221 and the posterior thigh link 24. The rotation of the posterior thigh link 24 can be limited by key connection, and in addition, the anti-rotation sleeve 221 and the posterior thigh link 24 can move synchronously.

The sliding chute 222 is arranged on the connecting housing 23, and the anti-rotation sleeve 221 can slide relative to the sliding chute 222, thereby adjusting a relative position between the anti-rotation sleeve 221 and the posterior thigh link 24.

The locking structure 223 is connected to the connecting housing 23, the telescopic adjusting nut 224 is arranged on an outer side of the connecting housing 23 and rotatably connected to the locking structure 223, and the telescopic adjusting nut 224 can adjust a locking state of the locking structure 223.

The locking structure 223, when in a locking state, can press against the anti-rotation sleeve 221 to limit the displacement of the anti-rotation sleeve 221 and the posterior thigh link 24. The locking structure 223, when in a loosen state, no longer presses against the anti-rotation sleeve 221, so that the anti-rotation sleeve 221 and the posterior thigh link 24 can move.

An overall operation form of the telescopic adjustment assembly 2 is more convenient. The telescopic adjustment assembly, except for the telescopic adjusting nut 224, is located in the connecting housing 23, which is more beautiful, and the adjustment can be completed only by using the telescopic adjusting nut 224.

As an alternative implementation, the calf unit 3 further includes a connecting flange 32, a calf link 33, and a calf plate shaft 34.

The connecting flange 32 is in drive connection with the actuator 4, and the actuator 4 can drive the connecting flange 32 to rotate relatively, thereby driving the calf link 33 to rotate relatively.

One end of the calf link 33 is detachably connected to the connecting flange 32 through a positioning marble, making assembly and disassembly easier. In addition, at least two positioning marble structures are disposed, and a specific connection position can be selected according to actual use demands, thereby extending a relative length of the calf link 33. Or, the calf link 33 with different length can be directly replaced, which enriches the optional structural forms.

The other end of the calf link 33 is connected to the calf plate shaft 34. The connection here is preferably a bolted connection, which makes assembly and disassembly more convenient and efficient.

The calf plate 31 is rotatably connected to the calf plate shaft 34, and the calf plate 31 can rotate relative to the calf plate shaft 34, thereby adapting to taper curves of posterior calf of different users.

A third axial adjustment assembly is jointly disposed on the calf plate shaft 34 and the calf plate 31, and a relative position between the calf plate shaft 34 and the calf plate 31 in an axial direction can be adjusted through the third axial adjustment assembly. Therefore, the calf plate 31 can axially move relative to the calf plate shaft 34 to further fit users with different heights and leg types. In this embodiment, the third axial adjustment assembly is preferably a combined structure of a bolt and a fixing hole. By forming multiple fixing holes in the calf plate shaft 34, the calf plate 31 can be bolted by selecting the fixing holes at different positions to achieve the adjustment of the relative position.

As an alternative implementation, the actuator 4 further includes a motor 41, a reducer 42, a motor Hall magnet 43, a reducer Hall magnet 44, and an ECU computing unit. The motor 41 and the reducer 42 are both connected to the housing 45, the motor 41 is in transmission connection with the reducer 42, and the reducer 42 is in drive connection with the connecting flange 32.

The motor 41, the reducer 42 and the connecting flange 32 can achieve transmission in turn, and the rotation of the connecting flange 32 can drive the entire calf unit 3 to rotate.

The motor Hall magnet 43 is arranged on the motor 41, the reducer Hall magnet 44 is arranged on the reducer 42, and the motor Hall magnet 43 and the reducer Hall magnet 44 are in communication connection with the ECU computing unit. The motor Hall magnet 43 can assist a corresponding PCB (printed circuit board) encoder in detecting a rotation speed of the motor rotor 412, and the reducer Hall magnet 44 can assist a corresponding PCB encoder in detecting a rotation speed of an output end, and then the magnitude, direction and speed of power assistance can be calculated in real time through a chip and an algorithm on the PCB, thereby achieving power assistance to people.

As an alternative implementation, the motor 41 includes a motor stator 411, a motor rotor 412, and a motor rotor gear 413. The motor stator 411 is located on an outer side of the motor rotor 412, the motor rotor gear 413 is connected to the motor rotor 412, and the rotation of the motor rotor 412 can drive the motor rotor gear 413 to rotate. The motor Hall magnet 43 is connected to the motor rotor gear 413, and the motor Hall magnet 43 can assist the corresponding PCB encoder in detecting the rotation speed of the motor rotor 412.

The reducer 42 includes a reducer gear 421, a gear mounting base 422, a crankshaft 423, a cycloidal gear 424, a pin 425, a pin wheel carrier 426, a magnet mounting base 427, and a reducer output flange 428.

The reducer gear 421 is in mesh connection with the motor rotor gear 413, and the rotation of the motor rotor gear 413 can drive the reducer gear 421 to rotate.

The reducer gear 421, the gear mounting base 422 and the crankshaft 423 are connected in turn, and the rotation of the reducer gear 421 can drive the crankshaft 423 to rotate.

The crankshaft 423 is connected to the cycloidal gear 424, the pin wheel carrier 426 can form a constraint on the cycloidal gear 424, and the rotation of the crankshaft 423 can drive the cycloidal gear 424 to rotate around the crankshaft 423 under the constraint of upper teeth of the pin wheel carrier 426.

The cycloidal gear 424 is connected to the reducer output flange 428 through the pin 425, the reducer output flange 428 is in flange connection with the connecting flange 32, and the rotation of the cycloidal gear 424 can drive the pin 425, the reducer output flange 428 and the connecting flange 32 to rotate in turn.

The magnet mounting base 427 is connected to the reducer output flange 428, the reducer Hall magnet 44 is connected to the magnet mounting base 427, and the reducer Hall magnet 44 can assist the corresponding PCB encoder in detecting the rotation speed of the output end.

The cycloidal reducer belongs to few-tooth-difference transmission. When the crankshaft 423 rotates one circle, it advances only one tooth. Therefore, there is an extremely large reduction ratio, and reverse drive can be achieved.

The actuator 4 in this embodiment, in addition to the foregoing structural forms, may also employ other types of structural forms, including, but not limited to, a servo motor, a reducer servo motor, a link, a lead screw, linear transmission, and pneumatic and hydraulic driving modes, which may be flexibly selected and arranged according to actual use demands.

The reducer 42, in addition to the structural form of a cycloidal reducer, may also employ a planetary reducer, a harmonic reducer, a gear reducer, a hydraulic reducer, a worm gear reducer or a bevel gear reducer, which may be flexibly selected and arranged according to actual use demands.

As an alternative implementation, the knee exoskeleton further includes a thigh strap 5, and both ends of the thigh strap 5 are connected to the anterior thigh plate 11 and the posterior thigh plate 21, respectively. The connection here is preferably a detachable connection mode. By arranging corresponding connection fixing portions on the anterior thigh plate 11 and the posterior thigh plate 21, the ends of the thigh strap 5 can be connected to the corresponding connection fixing portions, and the thigh strap 5 can play a role in auxiliary fixation and help achieve better adaptation between the thigh of the user and the exoskeleton.

As an alternative implementation, the knee exoskeleton further includes a calf strap 6, and the calf strap is connected to the calf plate 31. The connection here is preferably a detachably connection mode. The calf strap 6 can be sleeved on anterior calf of the user and cooperate with the calf plate 31 at a calf position, and can help achieve better adaptation between the calf of the user and the exoskeleton.

The foregoing is only the specific implementation of the present disclosure, but the scope of protection of the present disclosure is not limited thereto. Changes or replacements that can be easily thought by any person skilled in the art within the technical scope disclosed in the present disclosure should be covered within the scope of protection of the present disclosure. Therefore, the scope of protection of the present disclosure shall be subject to the appended claims.

## Claims

1. A knee exoskeleton, comprising an anterior thigh unit (1), a posterior thigh unit (2), a calf unit (3), and an actuator (4), wherein the anterior thigh unit (1) and the posterior thigh unit (2) are connected to the actuator (4), and the calf unit (3) is in drive connection with the actuator (4); the anterior thigh unit (4) comprises an anterior thigh plate capable of rotating relatively, the posterior thigh unit (2) comprises a posterior thigh plate (21) capable of rotating relatively and a telescopic adjustment assembly capable of regulating a relative distance between the anterior thigh plate (11) and the posterior thigh plate (21) in both horizontal and vertical directions; the posterior thigh plate (21) is located above and behind the anterior thigh plate (11), and the calf unit (3) comprises a calf plate (31) capable of rotating relatively, and the calf plate (31) is located below and behind the anterior thigh plate (11).

2. The knee exoskeleton according to claim 1, wherein the anterior thigh unit (1) further comprises an anterior thigh link (12) and an anterior thigh plate shaft (13), one end of the anterior thigh link (12) is connected to the actuator (4), and the other end of the anterior thigh link (12) is connected to one end of the anterior thigh plate shaft (13); the anterior thigh plate (11) is rotatably connected to the anterior thigh plate shaft (13); and a first axial adjustment assembly is jointly disposed on the anterior thigh plate shaft (13) and the anterior thigh plate (11), and a relative position between the anterior thigh plate shaft (13) and the anterior thigh plate (11) in an axial direction is capable of being adjusted through the first axial adjustment assembly.

3. The knee exoskeleton according to claim 1, wherein the posterior thigh unit (2) further comprises a connecting housing (23), a posterior thigh link (24), and a posterior thigh plate shaft (25); the connecting housing (23) is connected to the actuator (4), one end of the posterior thigh link (24) is movably connected to the connecting housing (23) through the telescopic adjustment assembly (22), and the other end of the posterior thigh link (24) is connected to the posterior thigh plate shaft (25); the posterior thigh plate (21) is rotatably connected to the posterior thigh plate shaft (25); and a second axial adjustment assembly is jointly disposed on the posterior thigh plate shaft (25) and the posterior thigh plate (21), and a relative position between the posterior thigh plate shaft (25) and the posterior thigh plate (21) in an axial direction is adjusted through the second axial adjustment assembly.

4. The knee exoskeleton according to claim 3, wherein the telescopic adjustment assembly (22) comprises an anti-rotation sleeve (221), a sliding chute (222), a locking structure (223), and a telescopic adjusting nut (224); the anti-rotation sleeve (221) is sleeved outside the posterior thigh link (24) and is capable of limiting rotation of the posterior thigh link (24); the sliding chute (222) is arranged on the connecting housing (23), the anti-rotation sleeve (221) is capable of sliding relative to the sliding chute (222), the locking structure (223) is connected to the connecting housing (23) and is configured to press against the anti-rotation sleeve (221) in a locking state, the telescopic adjusting nut (224) is arranged on an outer side of the connecting housing (23) and is rotatably connected to the locking structure (223), and the telescopic adjusting nut (224) is capable of adjusting the locking state of the locking structure (223).

5. The knee exoskeleton according to claim 1, wherein the calf unit (3) further comprises a connecting flange (32), a calf link (33), and a calf plate shaft (34); the connecting flange (32) is in drive connection with the actuator (4); one end of the calf link (33) is detachably connected to the connecting flange (32) through a positioning marble, and the other end of the calf link (33) is connected to the calf plate shaft (34); the calf plate (31) is rotatably connected to the calf plate shaft (34); and a third axial adjustment assembly is jointly disposed on the calf plate shaft (34) and the calf plate (31), and a relative position between the calf plate shaft (34) and the calf plate (31) in an axial direction is capable of being adjusted through the third axial adjustment assembly.

6. The knee exoskeleton according to claim 5, wherein the actuator (4) comprises a motor (41), a reducer (42), a motor Hall magnet (43), a reducer Hall magnet (44), and an ECU (Electronic Control Unit) computing unit; the motor (41) is in transmission connection with the reducer (42), the reducer (42) is in drive connection with the connecting flange (32), the motor Hall magnet (43) is arranged on the motor (41), the reducer Hall magnet (44) is arranged on the reducer (42), and the motor Hall magnet (43) and the reducer Hall magnet (44) are in communication connection with the ECU computing unit.

7. The knee exoskeleton according to claim 6, wherein the motor (41) comprises a motor stator (411), a motor rotor (412), and a motor rotor gear (413); the motor stator (411) is located on an outer side of the motor rotor (412), the motor rotor gear (413) is connected to the motor rotor (412), and the motor Hall magnet (43) is connected to the motor rotor gear (413);
the reducer (42) comprises a reducer gear (421), a gear mounting base (422), a crankshaft (423), a cycloidal gear (424), a pin (425), a pin wheel carrier (426), a magnet mounting base (427), and a reducer output flange (428); the reducer gear (421) is in mesh connection with the motor rotor gear (413), the reducer gear (421), the gear mounting base (422) and the crankshaft (423) are connected in turn, the crankshaft (423) is connected to the cycloidal gear (424), the pin wheel carrier (426) is capable of forming a constraint on the cycloidal gear (424), the cycloidal gear (424) is connected to the reducer output flange (428) through the pin (425), the magnet mounting base (427) is connected to the reducer output flange (428), the reducer output flange (428) is in flange connection with the connecting flange (32), and the reducer Hall magnet (44) is connected to the magnet mounting base (427).

8. The knee exoskeleton according to claim 1, further comprising a thigh strap (5), wherein both ends of the thigh strap (5) are connected to the anterior thigh plate (11) and the posterior thigh plate (21), respectively.

9. The knee exoskeleton according to claim 1, further comprising a calf strap (6), wherein the calf strap (6) is connected to the calf plate (31).

10. The knee exoskeleton according to claim 1, wherein the anterior thigh plate (11) corresponds to anterior thigh of a human, the posterior thigh plate (21) corresponds to posterior thigh of the human, and the calf plate (31) corresponds to posterior calf of the human.
